# EUROPÄISCHE PATENTSCHRIFT

(11) **EP 1 430 992 B1**
(45) Veröffentlichungstag und Bekanntmachung des Hinweises auf die Patenterteilung: **23.08.2006**
(21) Anmeldenummer: 03028773.4
(22) Anmeldetag: 13.12.2003
(51) Int. Cl.: B23Q 7/10, B23Q 7/04, B21D 43/10, B65G 47/91, B65G 47/90

(54) **Anlage zum Umsetzen von plattenförmigen Werkstücken mit einem verfahrbaren Schwenkarm**
Device for transferring flat workpieces with a linearly movable rotating arm
Appareil pour transférer des pièces plattes avec un bras rotatif mobile en translation

(30) Priorität: 20.12.2002 DE 10259941
(43) Veröffentlichungstag der Anmeldung: 23.06.2004
(73) Patentinhaber: IMA-Meinert GmbH & Co. KG Anlagenbau, 32457 Porta Westfalica (DE)
(72) Erfinder: Herold, Thomas, 32547 Bad Oeynhausen (DE)
(74) Vertreter: Elbertzhagen, Otto

(56) Entgegenhaltungen:
- EP-A- 0 960 687
- DE-A- 19 628 556
- US-A- 3 010 587

## Beschreibung

Die Erfindung bezieht sich auf eine Anlage mit den Merkmalen des Oberbegriffs von Anspruch 1.

Aus dem Dokument DE 196 28 556 A1 ist eine Anlage mit den vorgenannten Merkmalen bekannt, die zur Entnahme und Zuführung von Formteilen aus bzw. in Bearbeitungsmaschinen vorgesehen ist. Bei der bekannten Anlage ist die Schwenkwelle in horizontaler Richtung linear zwischen den Werkstückablage- und dem Werkstückaufnahmeplätzen verfahrbar.

Eine Anlage der eingangs genannten Art wird als automatische Beschickungs- und Stapelanlage vornehmlich zum Umsetzen von Platten eingesetzt, die aus holzartigen Werkstoffen bestehen und für die Herstellung von Möbelteilen bestimmt sind. In Gestalt einer Beschickungsanlage wird mit der Werkstück-Aufnahmevorrichtung an einem ersten Platz, einem Aufnahmeplatz oder einer Aufnahmestation, ein Werkstück aufgenommen und auf einem zweiten Platz, einem Ablegeplatz oder einer Ablegestation, abgesetzt, um von dort einer weiteren Bearbeitung zugeführt zu werden. Der Aufnahmeplatz befindet sich hierbei in der Regel am Oberende eines Plattenstapels, von wo die jeweils obere Platte des Stapels aufgenommen und zu einem tieferliegenden Ablegeplatz hin umgesetzt wird. Bei einer Stapelanlage ist die Bewegungsfolge umgekehrt, hier befindet sich der Ablegeplatz am Oberende eines sich bildenden Plattenstapels, die Aufnahme einer Platte erfolgt an einem tieferliegenden Aufnahmeplatz.

Bei den bekannten Anlagen zum Umsetzen von Platten dreht sich der Schwenkarm, an welchem die Werkstück-Aufnahmevorrichtung angelenkt ist, um einen festen Punkt. Entsprechend dreht sich die Schwenkwelle, an welcher der Schwenkarm fest angeordnet ist, um eine Achse, die in ihrer räumlichen Lage feststehend ist. Die Reichweite des Schwenkarms, die im wesentlichen gleich dem Durchmesser des Schwenkkreises der Werkstück-Aufnahmevorrichtung ist, entspricht dem Abstand zwischen dem jeweiligen Aufnahmeplatz und dem Ablegeplatz, zwischen denen die plattenförmigen Werkstücke umgesetzt werden. Diese beiden Plätze ändern sich in ihrer räumlichen Lage zueinander nicht, allerdings sind sie in ihrer Höhenrichtung zueinander versetzt angeordnet. Hierbei muß nicht nur der horizontale Abstand der beiden Plätze sondern auch ihr Höhenunterschied durch eine Bewegung des Schwenkarms um etwa 180° überbrückt werden.

Um eine doppelseitige Umsetz-Anlage der vorgenannten genannten Art zu errichten, benötigt man in bekannter Ausführung zwei Schwenkarmeinheiten mit je einer Schwenkwelle und einer Werkstück-Aufnahmevorrichtung. Bei einer doppelseitigen Anlage sind drei in horizontalem Abstand voneinander angeordnete Plätze vorhanden, von denen der in der Mitte liegende Platz entweder als Ablegeplatz oder als Aufnahmeplatz fungiert, je nachdem, ob es sich um eine Beschickungs- oder um eine Stapelanlage handelt. Entsprechend findet sich zu beiden Seiten des mittleren Platzes entweder je ein Aufnahmeplatz oder je ein Ablegeplatz. Der mittlere Platz ist meist auf einer Werkstücktransportvorrichtung angeordnet, auf der bei einer Beschickungsanlage die einem Bearbeitungsvorgang zuzuführenden Werkstücke wegbefördert oder bei einer Stapelanlage die zu stapelnden Werkstükke herantransportiert werden.

Der Erfindung liegt die Aufgabe zugrunde, eine Anlage der eingangs genannten Art zu schaffen, bei der mit einem einzigen Antrieb der Schwenkwelle und nur einem einzigen an der Schwenkwelle angeordneten Schwenkarm mit daran angelenkter Werkstückaufnahmevorrichtung ein doppelseitiges System verwirklicht werden kann, bei welchem von einem mittleren Ablege- oder Aufnahmeplatz ein daneben zu beiden Seiten angeordneter Aufnahmeplatz oder Ablegeplatz erreicht werden kann.

Ausgehend von einer Anlage, wie sie in dem Dokument DE 196 28 556 A1 beschrieben ist, wird diese Aufgabe dadurch gelöst, daß der Schwenkantrieb zugleich Verfahrantrieb der Schwenkwelle ist, welcher der Schwenkbewegung die Verfahrbewegung überlagert, wobei die Länge des Verfahrweges der Länge des Schwenkweges proportional ist.

Für die Erfindung ist wesentlich, daß trotz der begrenzten Reichweite des einzigen Schwenkarms mit der daran angelenkten Aufnahmevorrichtung auch weiter auseinanderliegende Werkstückplätze angefahren werden können. Hierbei wird der Abstand der Werkstückplätze in horizontaler Richtung gesehen durch die Verfahrbarkeit der Schwenkwelle überbrückt. Entscheidend ist, daß die jeweils beiden der meist drei Werkstückplätze, zwischen denen die plattenförmigen Werkstücke umzusetzen sind, in ihrer in der Regel unterschiedlichen Höhenlage den gleichen Abstand voneinander haben.

Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:
- Fig. 1: eine doppelseitige Beschickungsanlage im Querschnitt in der Ausgangslage vor dem Umsetzen eines Werkstücks von einem ersten Aufnahmeplatz auf einen Ablegeplatz,
- Fig. 2: eine der Fig. 1 entsprechende Darstellung der Anlage bei fortgeschrittener Umsetzbewegung,
- Fig. 3: eine den vorstehenden Figuren entsprechende Darstellung der Anlage jedoch bei Beendigung des Umsetzvorganges und
- Fig. 4: eine den vorstehenden Figuren entsprechende Darstellung der Anlage jedoch unter Darstellung des Bewegungsablaufs von dem Ablegeplatz zu einem dem ersten Aufnahmeplatz gegenüberliegenden, zweiten Aufnahmeplatz hin.

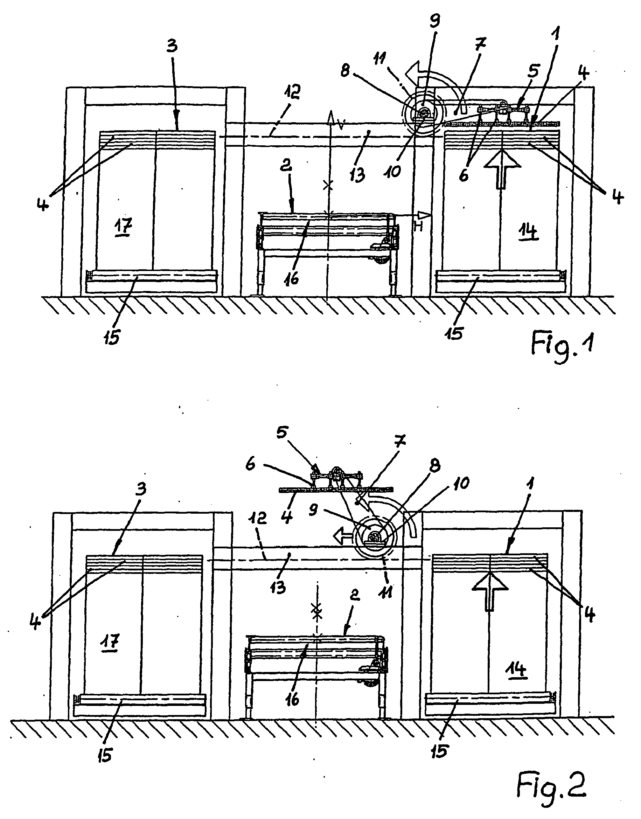

Im einzelnen zeigen die Figuren 1 - 4 einen ersten räumlich festliegenden Aufnahmeplatz 1, an dem plattenförmige Werkstücke 4 zum Umsetzen bereitgehalten werden. Der Aufnahmeplatz 1 befindet sich am Oberende eines Plattenstapels 14, der auf einer Hubvorrichtung 15 angeordnet ist. Die Hubvorrichtung 15 sorgt unabhängig von der Höhe des Stapels 14 dafür, daß der Platz 1 sich immer auf gleicher Höhenlage befindet, dort also das sogenannte Entnahmeniveau immer gleich ist. Bei der Entnahme wird vom Plattenstapel 14 das jeweils obenliegende Werkstück 4 nach oben hin abgenommen und mittels eines Schwenks zu einem Ablegeplatz 2 befördert, der sich auf einer Werkstücktransportvorrichtung 16 befindet. Zwischen dem Ablegeplatz 2 und dem Aufnahmeplatz 1 am Oberende des Plattenstapels 14 besteht ein Höhenunterschied, der entsprechend beim Umsetzen eines der Werkstücke 4 überbrückt werden muß.

Zum Umsetzen werden die Werkstücke 4 mittels einer Aufnahmevorrichtung 5 an ihren jeweils obenliegenden Seiten ergriffen. Dazu hat die Aufnahmevorrichtung 5 Vakuumelemente 16, an denen die Werkstücke 4 mittels Unterdruck gehalten werden. Die Aufnahmevorrichtung 5 ist derart am einen Ende eines Schwenkarms 7 gelagert, daß die daran gehaltenen, plattenförmigen Werkstücke 4 horizontal ausgerichtet bleiben, so wie sie auch auf den Plätzen 1 und 2 vor bzw. nach dem Umsetzen angeordnet sind. Mit seinem zweiten Ende ist der Schwenkarm 7 an einer Schwenkwelle 8 fest angeordnet, die für einen Schwenkvorgang jeweils um einen Winkel von etwa 270° drehbar ist. Die Schwenkwelle 8 weist dazu einen Schwenkantrieb 9 auf, bei dem es sich um einen sogenannten Rundmotor handelt, dessen Rotor mit der Schwenkwelle 8 verbunden ist. Ein solcher Rundmotor basiert auf dem Prinzip eines Linearantriebs, jedoch ist die Transportbahn in eine Kreisbahn gebogen.

Die wirksame Länge des Schwenkarms 7 in radialer Richtung zur Schwenkwelle 8 reicht nicht aus, um allein mit einer Drehung der Schwenkwelle 8 um einen Winkel von ca. 270° aus der in Fig. 1 gezeigten Position heraus das an der Aufnahmevorrichtung 5 gehaltene Werkstück 4 zum Ablegeplatz 2 zu transportieren und darauf abzusetzen. Zwar kann der Schwenkarm 7 die Höhendifferenz zwischen dem Aufnahmeplatz 1 und dem Ablegeplatz 2 überbrücken, nicht jedoch zugleich auch den horizontalen Abstand dieser beiden Plätze. Deshalb ist die Schwenkwelle 8 mitsamt ihrem Schwenkantrieb 9 in horizontaler Richtung linear verfahrbar.

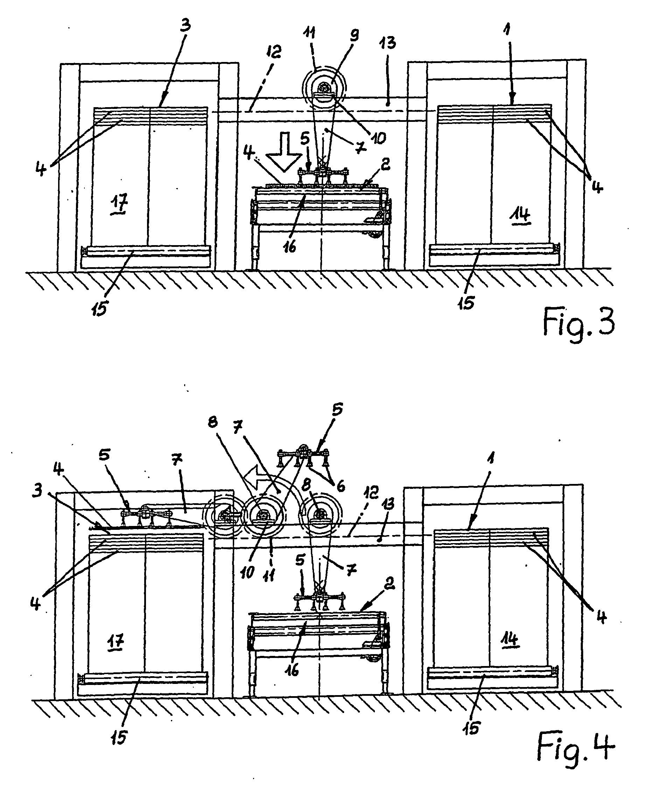

Wie Fig. 2 verdeutlicht, bewegt sich hierbei die Schwenkwelle 8 in ihrer horizontalen Achsebene in radialer Richtung. Dieses Verfahren findet zugleich mit der Drehung der Schwenkwelle 8 statt, und es besteht eine feste Relation zwischen dem Verfahrweg der Schwenkwelle 8 in der Horizontalrichtung und dem Schwenkwinkel des an der Schwenkwelle 8 festsitzenden Schwenkarms 7. Hat der Schwenkarm 7 aus seiner horizontalen Lage heraus, die er bei Aufnahme eines Werkstücks 4 vom Plattenstapel 14 einnimmt, einen Schwenk über einen Winkel von 270° ausgeführt, wonach er die in Fig. 3 gezeigte vertikale Ausrichtung nach unten hin einnimmt, dann hat gleichzeitig die Schwenkwelle 8 in horizontaler Bewegung die Wegstrecke durchfahren, die für die Überbrückung des Abstandes der beiden Plätze 1 und 2 mit der Aufnahmevorrichtung 5 erforderlich ist.

Fig. 3 veranschaulicht weiter die symmetrische Anordnung des Ablege- und Aufnahmeplatzes 2 zwischen dem ersten Plattenstapel 14 und einem zweiten Plattenstapel 18. Der Aufnahmeplatz 1 am Oberende des Plattenstapels 14, der Ablegeplatz 2, der sich auf der Werkstücktransportvorrichtung 16 befindet, und ein zweiter Aufnahmeplatz 3, der sich am Oberende des zweiten Plattenstapels 17 befindet, liegen in der Horizontalrichtung in einer Flucht, in der die Schwenkwelle 8 verfahrbar ist. Von dem Aufnahmeplatz 3 am Oberende des Plattenstapels 17 werden plattenförmige Werkstücke 4 in gleicher Weise aufgenommen und zum Ablegeplatz 2 befördert, wie vom ersten Aufnahmeplatz 1, nur ist die Linearbewegung und die Schwenkbewegung der Schwenkwelle 8 umgekehrt.

Der Aufnahmeplatz 3 am Oberende des zweiten Plattenstapels 17 liegt niveaugleich mit dem Aufnahmeplatz 2 am Oberende des ersten Plattenstapels 14, weswegen die Wegbedingungen zum Ablegeplatz 2 hin die gleichen sind wie die vom ersten Aufnahmeplatz 1 aus. Das Verfahren der Werkstück-Aufnahmevorrichtung 5 zwischen dem Ablegeplatz 2 und dem Aufnahmeplatz 3 am Oberende des zweiten Plattenstapels 17 erfolgt deshalb ebenfalls durch einen Schwenk der Schwenkwelle 8 um einen Winkel von ca. 270° bei gleichzeitigem Verfahren in horizontaler Richtung zum zweiten Plattenstapel 17 hin, wie es in Fig. 4 in zwei weiteren angedeuteten Positionen der Schwenkwelle 8 veranschaulicht ist. Auch beim Anfahren des zweiten Plattenstapels 17 mit der Werkstück-Aufnahmevorrichtung 5 sind die Bewegungsrichtungen der Schwenkwelle 8 umgekehrt gegenüber dem Anfahren des ersten Aufnahmeplatzes 1 auf dem ersten Plattenstapel 14.

Die Schwenkwelle 8 mit ihrem Schwenkantrieb 9 ist auf einem in horizontaler Richtung linear verfahrbaren Schlitten 10 angeordnet, der in der Verfahrrichtung der Schwenkwelle 8 auf einer Traverse 13 geführt ist. Der Schwenkantrieb 9 sorgt zugleich für das Verfahren der Schwenkwelle 8 bzw. des sie tragenden Schlittens 10, während gleichzeitig die Drehung der Schwenkwelle 8 und damit der Schwenk des Schwenkarms 7 erfolgt. Dazu ist auf der Schwenkwelle 8 nach Art eines Ritzels ein Antriebsrad 11 mit einer Umfangsverzahnung drehfest angeordnet, welches mit einer Zahnstange 12 kämmt, die entlang dem Verfahrweg des Schlittens 10 an der Traverse 13 fest angeordnet ist. Die Drehung und das damit gleichzeitige, horizontale Verfahren der Schwenkwelle 8 kann auch dadurch erreicht werden, daß anstelle des Schwenkantriebs 9 auf dem Schlitten 10 ein daran angreifender Linearantrieb vorgesehen wird, der als Verfahrantrieb für die Schwenkwelle 8 über das Antriebsrad 11 zugleich deren Schwenkung bewirkt.

Die vorstehend beschriebene Beschickungsanlage kann in gleicher Ausführung auch als Stapelanlage eingesetzt werden. Hierbei hat der mittlere Ablegeplatz 2 die Funktion als Aufnahmeplatz, von wo die auf der Transportvorrichtung 16 ankommenden Werkstücke aufgenommen werden. Abgelegt werden die Werkstücke in diesem Falle auf den beidseits der Transportvorrichtung 16 angeordneten Hubvorrichtungen 15, auf denen jeweils ein Plattenstapel 14 und 17 gebildet wird. Dementsprechend fungieren die an den Oberenden dieser Stapel liegenden Werkstückplätze 1 und 3 als Ablegeplätze. Die Bewegungsfolge der Schwenkwelle 8 ist jeweils umgekehrt im Vergleich zu der beim Beschickungsvorgang.

## Patentansprüche

1. Anlage zum Umsetzen von horizontalliegenden, plattenförmigen Werkstücken (4) zwischen zwei festliegenden Plätzen (1, 2; 2, 3), die in der Vertikalprojektion auf eine Horizontalebene gesehen in Abstand voneinander liegen, mit einer die Werkstücke (4) an ihren obenliegenden Seiten greifenden sowie horizontal haltenden Aufnahmevorrichtung (5), welche die Werkstücke (4) von dem jeweiligen Platz (1,2 oder 3) nach oben weg anhebt bzw. von oben her darauf absetzt und die am einen Ende eines Schwenkarms (7) gelagert ist, der mit seinem anderen Ende fest an einer horizontal angeordneten Schwenkwelle (8) sitzt, wobei die Schwenkwelle (8) mittels eines Verfahrantriebs in einer ihrer Axialebenen in radialer Richtung mit einer horizontalen Richtungskomponenten verfahrbar ist, die mit der horizontalen Abstandsrichtung der Werkstückplätze (1 - 3) übereinstimmt,
**dadurch** gekenntzeichnet,
daß die Schwenkwelle einen Schwenkantrieb (9) hat, der zugleich Verfahrantrieb der Schwenkwelle (8) ist, welcher der Schwenkbewegung die Verfahrbewegung überlagert, wobei die Länge des Verfahrweges der Länge des Schwenkweges proportional ist.

2. Anlage nach Anspruch 1,
**dadurch gekennzeichnet,**
**daß** die Schwenkwelle (8) in ausschließlich horizontaler Richtung linear verfahrbar ist.

3. Anlage nach Anspruch 1 oder 2,
**dadurch gekennzeichnet,**
**daß** in der horizontalen Abstandsrichtung drei der Werkstückplätze (1 - 3) vorhanden sind, zwischen denen die Schwenkwelle (8) verfahrbar ist.

4. Anlage nach einem der Ansprüche 1 - 3,
**dadurch gekennzeichnet,**
**daß** die Schwenkwelle (8) an einem auf einer Traverse (1) linear geführten Schlitten (10) und auf der Schwenkwelle (8) ein Antriebsrad (11) angeordnet ist, welches sich an der Traverse (13) formschlüssig abwälzt.

5. Anlage nach Anspruch 4,
**dadurch gekennzeichnet,**
**daß** das Antriebsrad (11) als Ritzel ausgeführt und an der Traverse (13) eine Zahnstange (12) angeordnet ist, in die das Antriebsrad (11) eingreift.

6. Anlage nach Anspruch 5,
**dadurch gekennzeichnet,**
**daß** der Schwenkantrieb (9) in Gestalt eines Schwenkmotors auf dem Schlitten (10) angeordnet ist.

7. Anlage nach Anspruch 6,
**dadurch gekennzeichnet,**
**daß** der Schwenkantrieb (9) in Gestalt eines Linearantriebs an dem Schlitten (10) angreift.

## Claims

1. Apparatus for turning horizontally aligned plate-shaped workpieces (4) between two stationary places (1,2; 2,3) which seen in the vertical projection onto a horizontal plane are spaced from one another, with a receiving device (5) which grips the work pieces (4) along their upper sides and holds them horizontal and which lifts the workpieces (4) upwards away from the relevant place (1, 2 or 3) and sets them down from above accordingly and which is mounted at one end of a swivel arm (7) which is seated by its other end fixedly on a horizontally mounted swivel shaft (8) whereby the swivel shaft (8) can be moved by means of a travel drive in one of its axial planes in the radial direction with a horizontal direction component which coincides with the horizontal spacing direction of the workpiece places (1-3)
**characterised in that**
the swivel shaft has a swivel drive (9) which is at the same time the travel drive of the swivel shaft (8) which superimposes the travel movement on the swivel movement whereby the length of the travel path is proportional to the length of the swivel path.

2. Apparatus according to claim 1,
**characterised in that**
the swivel shaft (8) can be moved linearly in an exclusively horizontal direction.

3. Apparatus according to claim 1 or 2,
**characterised in that**
three of the workpiece places (1 - 3) are provided in the horizontal spacing direction between which the swivel shaft (8) can travel.

4. Apparatus according to one of claims 1 to 3,
**characterised in that**
the swivel shaft is mounted on a slide carriage (10) which is linearly guided on a cross beam (1) and a drive wheel (11) is mounted on the swivel shaft (8) to roll with positive engagement on the cross beam (13).

5. Apparatus according to claim 4,
**characterised in that**
the drive wheel (11) is designed as a pinion and a toothed rod (12) is mounted on the cross beam (13) whereby the drive wheel (11) engages in the rod.

6. Apparatus according to claim 5,
**characterised in that**
the swivel drive (9) is mounted in the form of a swivel motor on the slide carriage (10).

7. Apparatus according to claim 6,
**characterised in that**
the swivel drive (9) engages in the form of a linear drive on the slide carriage (10).

## Revendications

1. Appareil pour transférer entre deux postes fixes (1, 2 ; 2, 3), situés à distance l'un de l'autre en projection verticale sur un plan horizontal, des pièces en forme de plaques (4), avec un dispositif de préhension (5) qui, saisissant les pièces (4) par leur faces supérieures et les maintenant horizontalement, enlève vers le haut lesdites pièces (4) de l'emplacement respectif (1, 23 ou 3), respectivement les y dépose d'en haut, et qui est monté à l'une des extrémités d'un bras pivotant (7) dont l'autre extrémité est fixée à un arbre de pivotement (8), ledit arbre de pivotement (8) pouvant être déplacé au moyen d'une commande de déplacement dans l'un de ses plans axiaux, dans la direction radiale, avec une composante directionnelle horizontale, qui correspond à la direction de l'écartement horizontal des emplacements des pièces (1 - 3),
**caractérisé en ce que**
l'arbre de pivotement présente un entraînement en pivotement (9) qui est simultanément la commande de déplacement de l'arbre de pivotement (8), qui se superpose au mouvement de pivotement, la longueur du parcours de déplacement étant proportionnelle à la longueur du parcours de pivotement.

2. Dispositif selon la revendication 1,
**caractérisé en ce que**
l'arbre de pivotement (8) peut être déplacé linéairement exclusivement dans la direction horizontale.

3. Dispositif selon revendication 1 ou 2,
**caractérisé en ce que**
dans la direction horizontale de l'écartement, il existe trois postes de pièces (1 - 3), entre lesquels l'arbre de pivotement (8) peut être conduit.

4. Dispositif selon l'une des revendications 1 - 3,
**caractérisé en ce que**
l'arbre de pivotement (8) est agencé sur un chariot (10) guidé linéairement sur une traverse (13) et **en ce que** sur l'arbre de pivotement (8) est agencée une roue de commande (11) qui roule en liaison positive avec la traverse (13).

5. Dispositif selon la revendication 4,
**caractérisé en ce que**
la roue de commande (11) est réalisée en tant que pignon et **en ce que**, sur la traverse (13), est agencée une crémaillère (12) avec laquelle coopère la roue de commande (11).

6. Dispositif selon la revendication 5,
**caractérisé en ce que**
l'entraînement en pivotement (9) est agencé sur le chariot (10) sous la forme d'un moteur pivotant.

7. Dispositif selon la revendication 6,
**caractérisé en ce que**
l'entraînement en pivotement (9), sous la forme d'un entraînement linéaire attaque le chariot (10).
